# EUROPEAN PATENT SPECIFICATION

(11) **EP 1 180 609 B1**
(45) Date of publication and mention of the grant of the patent: **06.04.2005**
(21) Application number: 01305313.7
(22) Date of filing: 19.06.2001
(51) Int. Cl.: F16B 25/00

(54) **Screw having a screw thread formed with concave facets**
Mit konkaven Facetten versehenes Schraubgewinde für eine Schraube
Filetage pour vis ayant des facettes concaves

(30) Priority: 16.08.2000 DE 20014147 U
(43) Date of publication of application: 20.02.2002
(73) Proprietor: Hsu, Tai-Ping, A-Lien Hsiang, Kaohsiung Hsien (TW)
(72) Inventor: Hsu, Tai-Ping, A-Lien Hsiang, Kaohsiung Hsien (TW)
(74) Representative: Kühn, Armin

(56) References cited:
- US-A- 3 469 491
- US-A- 5 961 267
- PATENT ABSTRACTS OF JAPAN vol. 1997, no. 06, 30 June 1997 (1997-06-30) & JP 09 053620 A (ETOO KK), 25 February 1997 (1997-02-25)

## Description

The invention relates to a screw according to the preamble of claim 1. Accordingly, the invention relates to a wood screw, more particularly to one having a screw thread formed with concave facets.

A conventional wood screw includes a shank portion and a head portion on one end of the shank portion. The shank portion generally has a continuous spiral screw thread formed thereon. The screw thread has an upper thread surface, a lower thread surface, and a cutting line that interconnects the upper and the lower thread surfaces at a radial edge of the upper and lower thread surfaces distal to the shank portion. When the conventional wood screw is driven into a wooden board, wood shavings fill the grooves formed between adjacent screw thread sections on the shank portion as the screw thread cuts into the fibers of the wooden boards, thereby resulting in a binding force between the screw and the wooden board. However, because the cutting line is in the form of a smooth spiral line, the cutting effect of the screw thread becomes duller as the depth of penetration of the conventional wood screw into the wooden board increases. In addition, the increased resistance can have an adverse affect on the required screw driving force and can result in possible damage to the screw. A screw of the initially-mentioned type is known from US-A-3 469 491.

It has been proposed heretofore to form the screw thread with densely and successively arranged grooves along the cutting line thereof. While the discontinuous screw thread as such provides additional space for receiving wood shavings as the screw thread cuts into the fibers of a wooden board, a much larger driving resistance is incurred, thereby resulting in a much larger driving force requirement and in possible damage to the screw.

Therefore, the main object of the present invention is to provide a wood screw that can be driven quickly into a wooden board while maintaining a relatively good binding force therewith.

According to the present invention, there is provided a screw having the features set forth in claim 1. Further embodiments of the invention are described in the dependent claims.

Other features and advantages of the present invention will become apparent in the following detailed description of the preferred embodiments with reference to the accompanying drawings, of which:
Figure 1 is a perspective view of the first preferred embodiment of a wood screw according to the present invention;
Figure 2 is a schematic side view of the first preferred embodiment;
Figure 3 is a cross-sectional view of the first preferred embodiment of a wood screw according to the present invention when driven into a wooden board;
Figure 4 is a perspective view of the second preferred embodiment of a wood screw according to the present invention; and
Figure 5 is a cross-sectional view of the third preferred embodiment of a wood screw according to the present invention when driven into a wooden board.

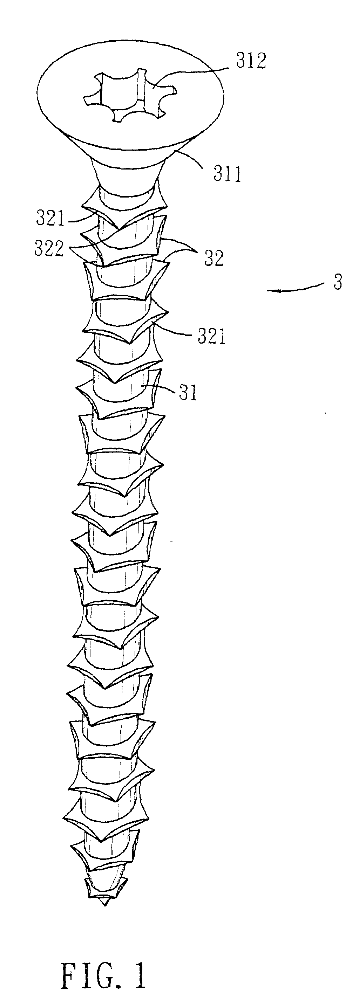

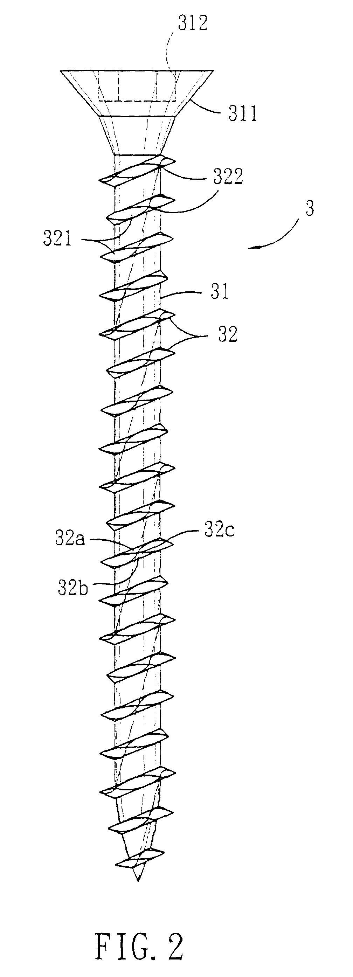

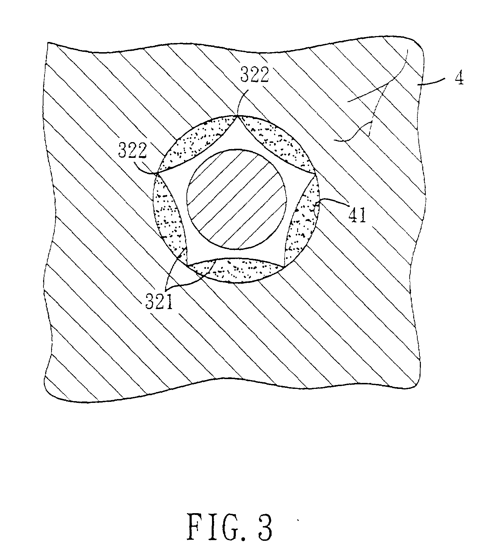

Referring to Figures 1, 2 and 3, the first preferred embodiment of a wood screw 3 according to the present invention is shown to include a shank portion 31 and a head portion 311 on one end of the shank portion 31. The shank portion 31 has a continuous spiral screw thread 32 with a plurality of turns formed thereon. The screw thread 32 has an upper thread surface 32a, a lower thread surface 32b, and a cutting line 32c that interconnects the upper and the lower thread surfaces 32a, 32b at a radial edge of the upper and lower thread surfaces 32a, 32b distal to the shank portion 31.

Unlike the conventional wood screw described beforehand, each of at least some of the turns of the screw thread 32 of the screw 3 of this invention is formed with two to six adjacent concave facets 321 along the cutting line 32c. Each of the concave facets 321 has a radial width ranging from about 60 to 120 degrees. Each pair of the adjacent concave facets 321 forms a pointed corner 322 at the cutting line 32c.

In this embodiment as is also the case in the above-mentioned prior art, the concave facets 321 are formed successively along the turns of the screw thread 32. Each turn of the screw thread 32 is formed with five adjacent concave facets 321, each having a radial width of 72 degrees. In addition, according to the invention upper ones of the pointed corners 322 on the screw thread 32 are aligned diagonally with corresponding lower ones of the pointed corners 322 with respect to an axis of the shank portion 31.

As the screw 3 is driven into a wooden board 4, the pointed corners 322 can cut into the fibers of the wooden board 4. In addition, the concave facets 321 can receive wood shavings 41 to ensure a relatively good binding force with the wooden board 4 without incurring a large increase in the driving force requirement. Furthermore, since the pointed corners 322 are not aligned along the axis of the shank portion 31, they can engage the wooden board 4 in succession as the screw 3 is driven into the latter, thereby minimizing possible damage to the screw thread 32.

If the turns of the screw thread 32 are each formed with only one concave facet 321, the advantage of a relatively good binding force without incurring a large increase in the driving force requirement cannot be achieved. If each concave facet 321 has a radial width less than 60 degrees, an undesirable increase in the screw driving resistance is observed. If the turns of the screw thread 32 are each formed with more than six concave facets 321, the cutting line of the screw thread 32 will be formed with densely arranged pointed corners 332 that will result in a much larger driving force requirement. If the radial width of each concave facet 321 is larger than 120 degrees, the strength of the screw thread 32 will be undesirably weakened.

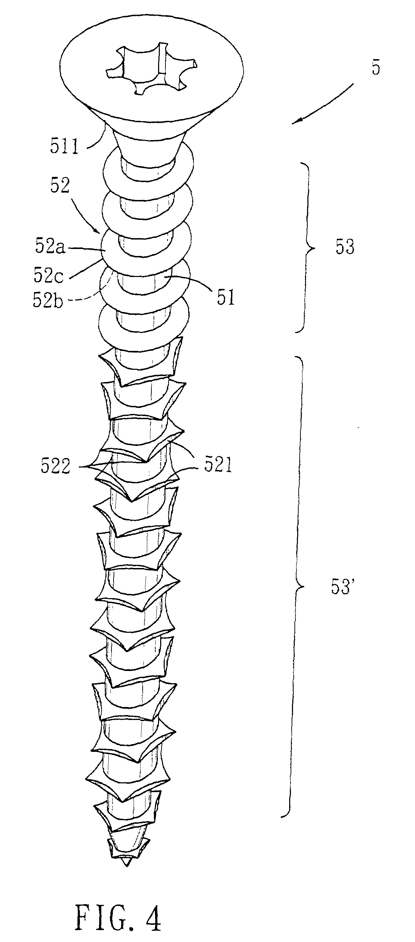

Referring to Figure 4, the second preferred embodiment of a wood screw 5 according to the present invention is shown to include a shank portion 51 and a head portion 511 on one end of the shank portion 51. The shank portion 51 has a continuous spiral screw thread 52 with a plurality of turns formed thereon. The screw thread 52 has an upper thread surface 52a, a lower thread surface 52b, and a cutting line 52c that interconnects the upper and lower thread surfaces 52a, 52b at a radial edge of the upper and lower thread surfaces 52a, 52b distal to the shank portion 51. The turns of the screw thread 52 include upper and lower ones 53, 53' disposed respectively on upper and lower parts of the shank portion 51. Adjacent concave facets 521, similar to those of the previous embodiment, are formed successively and solely on each of the lower ones 53' of the turns of the screw thread 52 along the cutting line 52c. Each pair of the adjacent concave facets 521 forms a pointed corner 522 at the cutting line 52c. Like the previous embodiment and according to the invention upper ones of the pointed corners 522 on the screw thread 52 are aligned diagonally with corresponding lower ones of the pointed corners 522 with respect to an axis of the shank portion 51.

Because the upper ones 53 of the turns of the screw thread 52 are not formed with the concave facets 521, a larger contact area can be established between the screw thread 52 and the wooden board (not shown) once the upper part of the shank portion 51 has been driven into the wooden board to minimize axial deviation and wobbling of the screw 5.

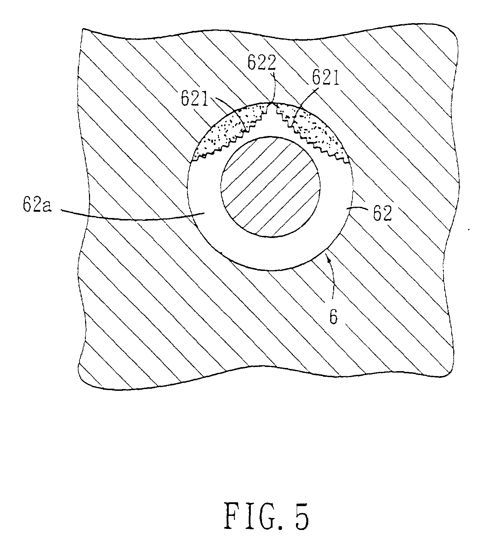

Referring to the Figure 5, the third preferred embodiment of a wood screw 6 according to the present invention is shown to be similar to the first preferred embodiment, except that each turn 62a of the screw thread 62 is formed with two adjacent concave facets 621 that form a pointed corner 622 therebetween. Each concave facet 621 has a radial width ranging from about 60 to 120 degrees, and a toothed surface such that the concave facets 621 are also capable of cutting into the fibers of a wooden board.

## Claims

1. A screw (3, 5, 6) including a shank portion (31, 51) and a head portion (311, 511) on one end of the shank portion (31, 51), the shank portion (31, 51) having a continuous spiral screw thread (32, 52, 62) with a plurality of turns formed thereon, the screw thread (32, 52, 62) having an upper thread surface (32a, 52a), a lower thread surface (32b, 52b), and a cutting line (32c, 52c) that interconnects the upper and lower thread surfaces (32a, 52a, 32b, 52b) at a radial edge of the upper and lower thread surfaces (32a, 52a, 32b, 52b) distal to the shank portion (31, 51), each of at least some of the turns of the screw thread (32, 52, 62) is formed with from two to six adjacent concave facets (321, 521, 621) along the cutting line (32c, 52c), each of the concave facets (321, 521, 621) having a radial width ranging from about 60 to 120 degrees, each pair of the adjacent concave facets (321, 521, 621) forming a pointed corner (322, 522, 622) at the cutting line (32c, 52c), wherein the concave facets (321) are formed successively along the turns of the screw thread (32), **characterized in that** upper ones of the pointed corners (322) on the cutting line (32c) are aligned diagonally with corresponding lower ones of the pointed corners (322) with respect to an axis of the shank portion (31).

2. The screw (5) of Claim 1, further **characterized in that** the turns of the screw thread (52) include upper and lower ones (53, 53') disposed respectively on upper and lower parts of the shank portion (51), the concave facets (521) being formed successively and solely on the lower ones (53') of the turns of the screw thread (52).

3. The screw (6) of Claim 1 or 2, further **characterized in that** each of the concave facets (621) has a toothed surface.

## Patentansprüche

1. Schraube (3, 5, 6) mit einem Schaftbereich (31, 51) und einem Kopfbereich an dem einen Ende des Schaftbereichs (31, 51), wobei der Schaftbereich (31, 51) ein kontinuierliches spiralförmiges Schraubengewinde (32, 52, 62) mit einer Vielzahl von Windungen darauf ausgebildet aufweist, das Schraubengewinde (32, 52, 62) eine obere Gewindefläche (32a, 52a), eine untere Gewindefläche (32b, 52b) und eine Schneidlinie (32c, 52c) aufweist, die die obere und die untere Gewindefläche (32a, 52a, 32b, 52b) miteinander an einem radialen Rand der oberen und unteren Gewindefläche (32a, 52a, 32b, 52b) distal zu dem Schaftbereich (31, 51) verbindet, jede der zumindest einigen der Windungen des Schraubengewindes (32, 52, 62) mit zwei bis sechs nebeneinanderliegenden konkaven Facetten (321, 521, 621) entlang der Schneidlinie (32c, 52c) ausgebildet ist, jede der konkaven Facetten (321, 521, 621) eine radiale Weite im Bereich von etwa 60 bis 120 Grad aufweist, jedes Paar der nebeneinanderliegenden konkaven Facetten (321, 521, 621) eine spitz zulaufende Ecke (322, 522, 622) an der Schneidlinie (32c, 52c) ausbildet, wobei die konkaven Facetten (321) nacheinander entlang den Windungen des Schraubengewindes (32) ausgebildet sind, **dadurch gekennzeichnet, dass** die oberen der spitz zulaufenden Ecken (322) auf der Schneidlinie (32c) diagonal zu den korrespondierenden unteren der spitz zulaufenden Ecken (322) im Bezug auf eine Achse des Schaftbereichs (31) ausgerichtet sind.

2. Schraube (5) nach Anspruch 1, die ferner **dadurch gekennzeichnet ist, dass** die Windungen des Schraubengewindes (52) obere und untere (53, 53') aufweisen, die auf einem oberen bzw. einem unteren Abschnitt des Schaftbereichs (51) angeordnet sind, wobei die konkaven Facetten (521) nacheinander und ausschließlich auf den unteren (53') der Windungen des Schraubengewindes (52) ausgebildet sind.

3. Schraube (6) nach Anspruch 1 oder 2, die ferner **dadurch gekennzeichnet ist, dass** jede der konkaven Facetten (621) eine gezahnte Fläche aufweist.

## Revendications

1. Vis (3, 5, 6) comprenant une partie tige (31, 51) et une partie tête (311, 511) à une extrémité de la partie tige (31, 51), la partie tige (31, 51) ayant un filetage pour vis spiral continu (32, 52, 62) avec une pluralité de spires formées dessus, le filetage pour vis (32, 52, 62) ayant une face de filetage supérieure (32a, 52a), une face de filetage inférieure (32b, 52b) et une arête (32c, 52c) reliant les faces de filetage supérieure et inférieure (32a, 52a, 32b, 52b) au niveau d'un bord radial des faces de filetage supérieure et inférieure (32a, 52a, 32b, 52b) éloigné de la partie tige (31, 51), chacune d'au moins certaines des spires du filetage pour vis (32, 52, 62) est formée avec de deux à six facettes concaves adjacentes (321, 521, 621) le long de l'arête (32c, 52c), chacune des facettes concaves (321, 521, 621) ayant une largeur radiale allant d'environ 60 à 120 degrés, chaque paire de facettes concaves adjacentes (321, 521, 621) formant un coin pointu (322, 522, 622) sur l'arête (32c, 52c), les facettes concaves (321) étant formées successivement le long des spires du filetage pour vis (32), **caractérisée en ce que** les coins pointus supérieurs (322) de l'arête (32c) sont alignés en diagonale avec les coins pointus inférieurs (322) correspondants par rapport à un axe de la partie tige (31).

2. Vis (5) selon la revendication 1, **caractérisée en outre en ce que** les spires du filetage pour vis (52) comprennent des spires supérieures et inférieures (53, 53') disposées respectivement sur les parties supérieure et inférieure de la partie tige (51), les facettes concaves (521) étant formées successivement et uniquement sur les spires inférieures (53') du filetage pour vis (52).

3. Vis (6) selon la revendication 1 ou 2, **caractérisée en outre en ce que** chacune des facettes concaves (621) a une surface dentelée.
